# EUROPEAN PATENT APPLICATION

(11) **EP 4 283 833 A1**
(43) Date of publication of application: **29.11.2023**
(21) Application number: 21924815.0
(22) Date of filing: 07.12.2021
(51) Int. Cl.: H02J 50/12, H02J 7/00, H02J 7/10

(54) **POWER RECEIVING DEVICE AND CONTACTLESS POWER FEEDING SYSTEM**

(30) Priority: 08.02.2021 JP 2021018195
(71) Applicant: Murata Machinery, Ltd., Kyoto-shi, Kyoto 601-8326 (JP)
(72) Inventor: TOMITA, Hiroyasu, Inuyama-shi, Aichi 484-8502 (JP)
(74) Representative: Hoffmann Eitle
(86) International application number: PCT/JP2021/044972
(87) International publication number: WO 2022/168430

(57) **Abstract**

A conveyor system 1 has a power receiving unit 310 configured to receives power in a contactless manner, a step-up/step-down chopper 311 configured to control and supply power supplied from the power receiving unit 310 to a load, a capacitor unit 312 configured to be charged by the power supplied from the power receiving unit 310 and supply the power to the load via the step-up/step-down chopper 311, and a bypass circuit 314 configured to allow the power receiving unit 310 to bypass the step-up/step-down chopper 311 to supply the power to the capacitor unit 312, and the bypass circuit 314 allows the power receiving unit 310 to supply the power to the capacitor unit 312 via the bypass circuit 314 when voltage of the capacitor unit 312 is equal to or less than a first predetermined value.

## Description

### Technical Field

The present invention relates to a power receiving device and a contactless power feeding system.

### Background Art

Patent Document 1 discloses an inrush current prevention circuit for an AC/DC power supply having a rectifier configured to rectify alternating current and a smoothing capacitor configured to smooth output of the rectifier, the inrush current prevention circuit comprising: a signal output means configured to output a signal corresponding to a current value of current flowing into the smoothing capacitor, and variable impedance means configured to change impedance not to cause the inrush current to flow into the smoothing capacitor in response to the signal, the variable impedance means being interposed between the rectifier and the smoothing capacitor.

### Citation List

### Patent Literature

[Patent Literature 1] Japanese Unexamined Patent Publication No. 10-32982

### Summary of Invention

### Technical Problem

In the above-described conventional device, incoming current is adjusted by the variable impedance means (transistor) to prevent occurrence of the inrush current (inrush current) caused by charge current flowing into the smoothing capacitor. In conventional devices, for example, when the capacitor has a large capacity, it is necessary to adjust a current value of the incoming current over a long period of time to prevent the occurrence of inrush current. However, in conventional devices, adjusting the current value of the incoming current over a long period of time can generate a large lot of heat in a circuit. Therefore, it is difficult to prevent the occurrence of inrush current over a long period of time.

One aspect of the present invention is to provide a power receiving device and a contactless power feeding system capable of preventing occurrence of inrush current over a long charging time.

### Solution to Problem

A power receiving device according to one aspect of the present invention includes: a power receiving unit configured to receive power in a contactless manner from a power supply configured to supply power at a constant current value; a step-up/step-down chopper connected to the power receiving unit and configured to control and supply power supplied from the power receiving unit to a load; an auxiliary power supply connected to the step-up/step-down chopper and configured to supply power to the load via the step-up/step-down chopper; and a bypass section configured to allow the power receiving section to bypass the step-up/step-down chopper to supply power to the auxiliary power supply, and the bypass section allows the power receiving section to supply power to the auxiliary power supply via the bypass section when a voltage of the auxiliary power supply is equal to or less than a first predetermined value.

In the power receiving device according to one aspect of the present invention, when the voltage of the auxiliary power supply is equal to or less than the first predetermined value, the bypass section allows the power receiving section to supply power to the auxiliary power supply via the bypass section. During initial charging of the auxiliary power supply, the voltage of the auxiliary power supply is equal to or less than the first predetermined value. In the power receiving device, by supplying power from the power receiving section to the auxiliary power supply via the bypass section during the initial charging of the auxiliary power supply, it is possible to prevent inrush current from the power receiving section to the auxiliary power supply exceeding a certain current value (steady-state current value) from occurring during the initial charging (when the power supply is turned on). Moreover, unlike conventional devices, the power receiving device does not need to adjust the current value of the incoming current, thereby suppressing heat generation during charging. Therefore, the power receiving device can prevent the occurrence of inrush current over a long charging time.

In one embodiment, the bypass section may include a switching section configured to switch on and off of supply of power from the power receiving section to the auxiliary power supply via the bypass section, and the switching section may turn on to allow the power receiving section to supply the power to the auxiliary power supply via the bypass section when a predetermined condition is satisfied, and turn off to allow the power receiving section to stop the supply of the power to the auxiliary power supply via the bypass section when the predetermined condition is not satisfied, and the predetermined condition may include a case where the voltage of the auxiliary power supply is equal to or less than the first predetermined value. In this configuration, by switching on and off by the switching section, it is possible to supply power from the power receiving section to the auxiliary power supply via the bypass section when the voltage of the auxiliary power supply is equal to or less than the first predetermined value.

In one embodiment, the predetermined condition may include a case in which the input voltage of the step-up/step-down chopper is equal to or less than the second predetermined value, and the switching section may turn on when the voltage of the auxiliary power supply is equal to or less than the first predetermined value and the input voltage of the step-up/step-down chopper is equal to or less than the second predetermined value. In this configuration, it is possible to avoid a large voltage being applied to the bypass section.

In one embodiment, the predetermined condition may include a case in which the output voltage of the step-up/step-down chopper is equal to or more than a third predetermined value, and the switching section may turn on when the voltage of the auxiliary power supply is equal to or less than the first predetermined value and the input voltage of the step-up/step-down chopper is equal to or less than the second predetermined value, and the output voltage of the step-up/step-down chopper is equal to or more than the third predetermined value. In this configuration, the auxiliary power supply can be charged after power is supplied to the step-up/step-down chopper.

In one embodiment, the bypass section may be a circuit including a comparator. In this configuration, an operating voltage can be raised higher and influence of noise can be hardly exerted.

A contactless power feeding system according to one aspect of the present invention includes the above-described power receiving device and a power transmission device configured to transmit power at a constant current value to the power receiving device.

The contactless power feeding system according to one aspect of the present invention includes the above-described power receiving device. Therefore, the contactless power feeding system can prevent the occurrence of inrush currents over a long charging time.

In one embodiment, the power transmission device may have a feeder provided along the track rail and the power receiving device may be provided to a traveling vehicle traveling on the track rail. In this configuration, when the contactless power feeding system is applied to a conveyor system, the occurrence of inrush current can be prevented over a long charging time.

### Advantageous Effects of Invention

According to one aspect of the present invention, inrush currents can be prevented over a long charging time.

### Brief Description of Drawings

FIG. 1 is a diagram schematically illustrating a track of a conveyor system according to an embodiment.
FIG. 2 is a diagram illustrating a configuration of a contactless power feeding device.
FIG. 3 is a diagram illustrating a configuration of a power receiving device.
FIG. 4 is a diagram schematically illustrating a configuration of a voltage monitoring section of a bypass circuit.
FIG. 5 is a timing chart illustrating an operation of the power receiving device.

### Description of Embodiments

One preferred embodiment according to the present invention will now be described in detail with reference to the attached drawings. In description of the drawings, like or equivalent elements are designated by like reference signs, and duplicate description is omitted.

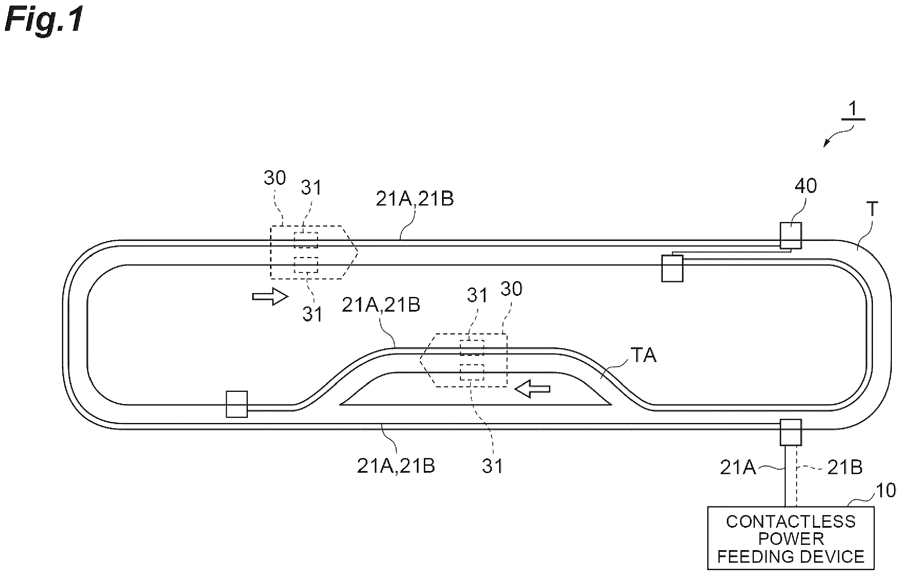

As illustrated in FIG. 1, a conveyor system (contactless power feeding system) 1 includes a contactless power feeding device (power transmission device) 10 and a ceiling conveyor (traveling vehicle) 30. The conveyor system 1 is a system configured to convey articles (not illustrated) using the ceiling conveyor 30 capable of traveling along a track rail T. In the conveyor system 1, power is supplied in a contactless manner from feeders 21A and 21B provided on the track rail T to the ceiling conveyor 30. The ceiling conveyor 30 drives traveling of the ceiling conveyor 30 or various devices provided in the ceiling conveyor 30 with the supplied power.

The ceiling conveyor 30 includes, for example, a ceiling suspended type crane, an overhead hoist transfer (OHT), and the like. Articles include, for example, containers configured to store a plurality of semiconductor wafers, containers configured to store glass substrates, reticle pods, FOSB, SMIF Pod, general components, and the like. The following describes the conveyor system 1 as an example in which the ceiling conveyor 30 travels, for example in a factory, along the track rail T installed on a ceiling of the factory.

The track rail T is, for example, an orbiting track. The feeders 21A and 21B are supplied with power from the contactless power feeding device 10. The feeders 21A and 21B are disposed below the track rail T and on at least one of a right side and a left side with respect to the center of the track in a traveling direction of the ceiling conveyor 30. Note that because the feeder 21B is provided below the feeder 21A, the feeder 12B is in a state of being laid below the feeder 21A in FIG. 1.

The feeders 21A and 21B can be rearranged with respect to the track rail T by a switching unit 40. The feeders 21A and 21B are disposed on the left side of the track rail T in an initial area connected to the contactless power feeding device 10. As the ceiling conveyor 30 travels along the track rail T in the traveling direction, the feeders 21A and 21B are switched in disposition from the left side to the right side of the track rail T by the switching unit 40. The feeders 21A and 21B being disposed on the right side of the track rail T allows power to be continuously supplied also when the ceiling conveyor 30 travels on a branch line TA that branches off from the track rail T, as illustrated in FIG. 1.

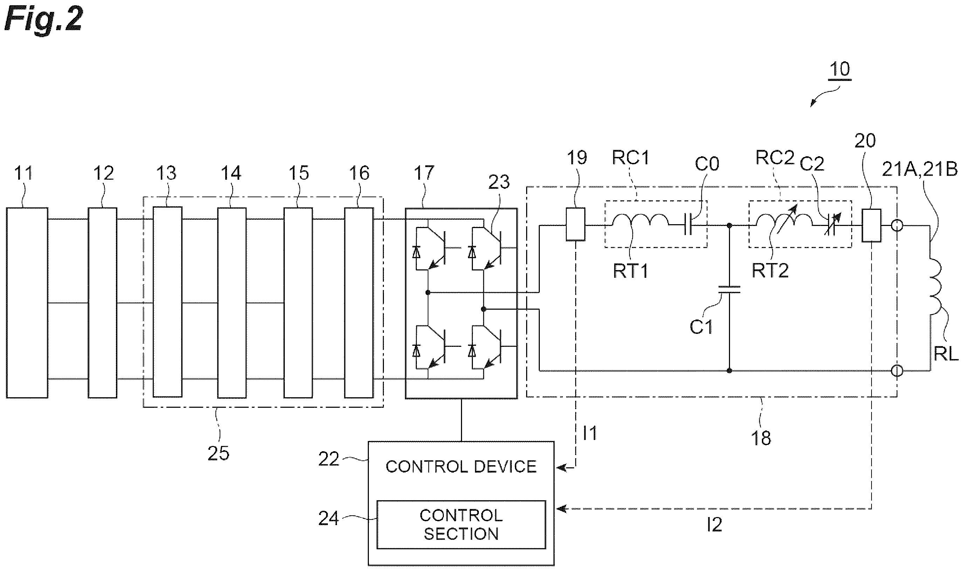

As illustrated in FIG. 2, the contactless power feeding device 10 supplies power to the ceiling conveyor 30 in a contactless manner. The contactless power feeding device 10 provides power at a constant current value. The contactless power feeding device 10 includes a power supply 11, a wiring breaker 12, a noise filter 13, a power factor improvement device 14, a rectifier 15, a smoother 16, an inverter 17, a filter circuit 18, a first current sensor 19, a second current sensor 20, feeders 21A and 21B, and a control device 22. The noise filter 13, the power factor improvement device 14, the rectifier 15, and the smoother 16 constitute a power converter 25.

The power supply 11 is a facility to supply AC power, such as a commercial power supply, and supplies AC power (three-phase 200 V). A frequency of the AC power is, for example, 50 Hz or 60 Hz. The wiring breaker 12 opens an electrical circuit when an overcurrent flows. The noise filter 13 removes noise from the AC power. The power factor improvement device 14 improves the power factor by bringing an input current closer to a sine wave. The rectifier 15 converts the AC power supplied from the power supply 11 (power factor improvement device 14) into DC power. The smoother 16 smooths the DC power converted in the rectifier 15. The power converter 25 may further have a step-up/step-down function.

The inverter 17 converts the DC power output from the smoother 16 into an AC power and outputs it to the filter circuit 18. The inverter 17 has a plurality of switching elements 23. The switching elements 23 are elements capable of switching electrical opening and closing.

The filter circuit 18 is provided between the inverter 17 and the feeders 21A and 21B. The filter circuit 18 suppresses harmonic noise. The filter circuit 18 has a reactor RT1, a capacitor C0, a capacitor C1, a reactor RT2, and a capacitor C2. The reactor RT1 and the capacitor C0 are connected in series to form a first resonant circuit RC1. The reactor RT2 and the capacitor C2 are connected in series to form a second resonant circuit RC2. The first resonant circuit RC1 and the second resonant circuit RC2 are connected in series. The capacitor C1 is connected in parallel to the first resonant circuit RC1 and the second resonant circuit RC2.

The first current sensor 19 detects a current I1 (inverter current) output from the inverter 17, that is, flowing through the inverter 17. The first current sensor 19 outputs a first current signal indicating the detected current I1 to the control device 22. The second current sensor 20 detects a current I2 (feeding current) of the AC power passing through the second resonant circuit RC2. The second current sensor 20 outputs a second current signal indicating the detected current I2 to the control device 22.

The feeders 21A and 21B constitute coils configured to transfer power in a contactless manner to the power receiving section 310a (described later) of the ceiling conveyor 30. The feeders 21A and 21B generate magnetic flux when the AC power is supplied from the filter circuit 18. The feeders 21A and 21B have an inductance RL. In the present embodiment, the phases of the alternating currents flowing through the plurality of feeders 21A and 21B are not synchronized with each other.

The control device 22 controls the operation of the inverter 17. The control device 22 is a computer system or a processor implemented in an integrated circuit. The control device 22 includes a central processing unit (CPU), a read only memory (ROM), a random access memory (RAM), and the like, and an input/output interface and the like. The ROM stores various programs or data.

The control device 22 has a control unit 24. The control device 22 is connected to the first current sensor 19 and the second current sensor 20 of the filter circuit 18. The first current signal and the second current signal output from the first current sensor 19 and the second current sensor 20, respectively, are input to the control device 22.

The control unit 24 controls the magnitude of the AC power supplied to the feeders 21A and 21B by controlling the inverter 17, thereby controlling the magnitude of power supplied to the ceiling conveyor 30. In the present embodiment, the power control is performed using phase shift control. The control unit 24 performs power control so that the value of power transmitted to the ceiling conveyor 30 is a target value based on the first current signal and the second current signal output from the first current sensor 19 and the second current sensor 20, respectively. As a result, power at a constant current value is supplied to the ceiling conveyor 30.

As illustrated in FIG. 1, the ceiling conveyor 30 travels along the track rail T to convey articles. The ceiling conveyor 30 is configured to be capable of transferring articles. The number of units of the ceiling conveyor 30 included in the conveyor system 1 is not limited to a particular number, and is two or more.

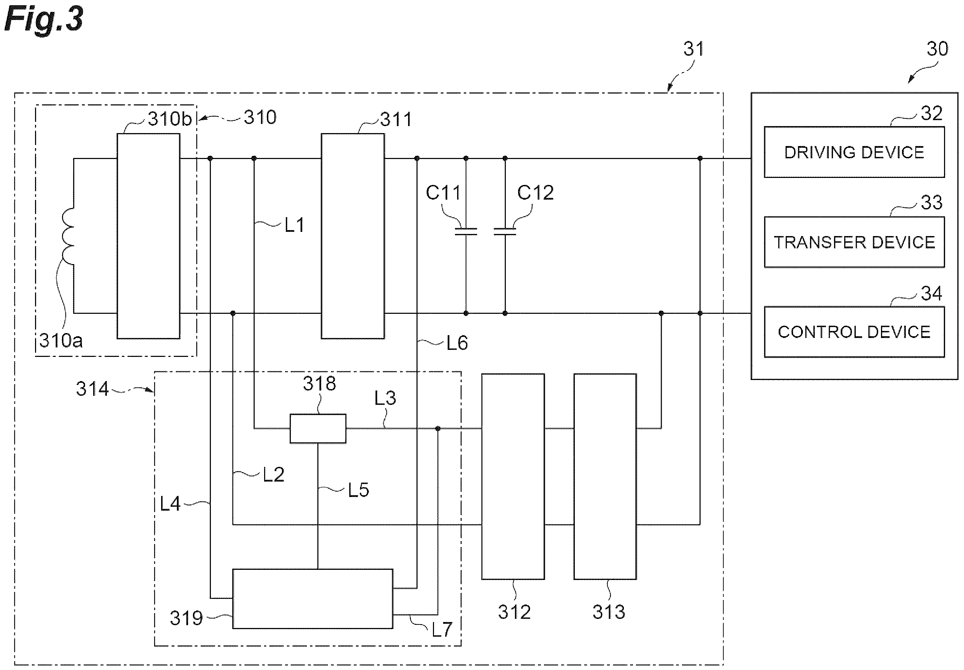

As illustrated in FIG. 3, the ceiling conveyor 30 includes a power receiving device 31, a driving device 32, a transfer device 33, and a control device 34.

The power receiving device 31 receives power transmitted from the contactless power feeding device 10 in a contactless manner. The power receiving device 31 supplies the received power to the driving device 32, the transfer device 33, and the control device 34. The power receiving device 31 has a power receiving unit 310, a step-up/step-down chopper 311, a capacitor unit (auxiliary power supply) 312, a bi-directional power supply 313, and a bypass circuit (bypass section) 314. The power receiving device 31 includes a capacitor C11 and a capacitor C12. The capacitors C11 and C12 are smoothing capacitors.

The power receiving unit 310 receives power from the feeders 21A and 21B in a contactless manner. The power receiving unit 310 includes a power receiving section 310a and a parallel resonant section 310b. The power receiving section 310a is a coil configured to receive power. Interlinkage of the magnetic flux generated by the feeders 21A and 21B with the power receiving section 310a generates AC power in the power receiving section 310a. The power receiving section 310a supplies the AC power to the parallel resonant section 310b. The parallel resonant section 310b rectifies the high-frequency current of the AC power supplied from the power receiving section 310a and also generates DC power (hereinafter simply referred to as "power"). The parallel resonant section 310b includes a capacitor, a diode, and the like. The parallel resonant section 310b outputs power.

The step-up/step-down chopper 311 controls the power. The step-up/step-down chopper 311 boosts or steps down the voltage of the power supplied from the power receiving unit 310 or the capacitor unit 312. The step-up/step-down chopper 311 includes a capacitor, a diode, an inductor, and the like. The step-up/step-down chopper 311 is connected to the power receiving unit 310. The step-up/step-down chopper 311 supplies the power to loads such as the driving device 32 or the like.

The capacitor unit 312 performs charging and discharging. The capacitor unit 312 is charged by the power supplied from the power receiving unit 310 and by regenerative power supplied via the bi-directional power supply 313. The capacitor unit 312 discharges as needed to assist in supplying power to the loads such as the driving device 32 or the like. The capacitor unit 312 includes a plurality of capacitors. The capacitance of the capacitor unit 312 is, for example, 30F. The capacitor unit 312 is connected to the power receiving unit 310 and the step-up/step-down chopper 311. Specifically, an input end of the capacitor unit 312 is connected to an output side of the power receiving unit 310 and an input side of the step-up/step-down chopper 311 by connection lines L1 and L3 and a connection line L2. A switch 318 is provided between the connection lines L1 and L3.

The bi-directional power supply 313 converts between DC and AC in both directions. The bi-directional power supply 313 includes a bi-directional DC/DC converter. The output end of the bi-directional power supply 313 is connected to the output side of the power receiving device 31. The bi-directional power supply 313 converts the regenerative power from the loads (the motor or the like) and supplies the converted power to the capacitor unit 312.

With the bypass circuit 314, the power supplied from the power receiving unit 310 bypasses the step-up/step-down chopper 311. The bypass circuit 314 allows the power receiving unit 310 to bypass the step-up/step-down chopper 311 to supply the power to the capacitor unit 312. The bypass circuit 314 allows the power receiving unit 310 to supply the power to the capacitor unit 312 via the bypass circuit 314 when the predetermined condition is satisfied. The bypass circuit 314 is connected between the power receiving unit 310 and the capacitor unit 312 without the step-up/step-down chopper 311 interposed therebetween.

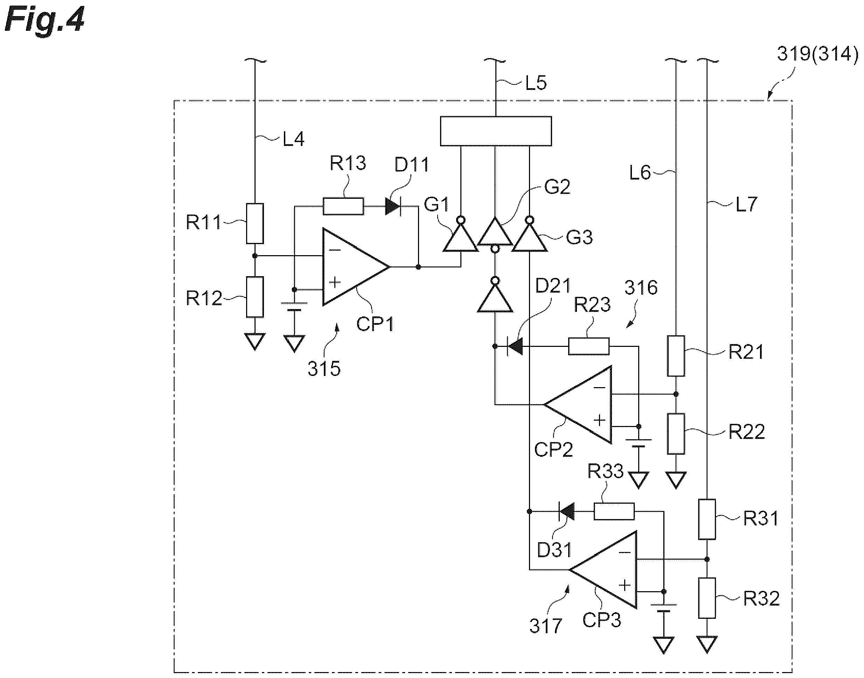

As illustrated in FIGS. 3 and 4, the bypass circuit 314 has a first comparator circuit 315, a second comparator circuit 316, a third comparator circuit 317, and a switch (switching section) 318. The first comparator circuit 315, the second comparator circuit 316, and the third comparator circuit 317 constitute a voltage monitoring section 319.

The first comparator circuit 315 monitors the input voltage of the step-up/step-down chopper 311. The first comparator circuit 315 includes a first comparator CP1, resistors R11, R12, and R13, and a diode D11. To a first terminal (non-inverting input) of the first comparator CP1, the input voltage of the step-up/step-down chopper 311 is input via a connection line L4. The connection line L4 is connected to the input side of the step-up/step-down chopper 311. In FIG. 3, the connection line L4 is connected to a position different from that of the connection line L1 on the input side of the step-up/step-down chopper 311, but is actually connected to the same position as the connection line L1.

A second pin (inverting input) of the first comparator CP1 is a reference pin, and voltage of the second predetermined value is input thereto. In the present embodiment, the second predetermined value is 60 V. The first comparator circuit 315 outputs a comparison result (voltage). The comparison result output from the first comparator circuit 315 is output to the switch 318 via a NOT gate G1 and a connection line L5.

The second comparator circuit 316 monitors the output voltage of the step-up/step-down chopper 311. The second comparator circuit 316 includes a second comparator CP2, resistors R21, R22, and R23, and a diode D21. The output voltage of the step-up/step-down chopper 311 is input to the first terminal of the second comparator CP2 via a connection line L6. The connection line L6 is connected to the output side of the step-up/step-down chopper 311. A second terminal of the second comparator CP2 is a reference terminal, and voltage of the third predetermined value is input. In the present embodiment, the third predetermined value is 320 V. A comparison result output from the second comparator circuit 316 is output to the switch 318 via a buffer amplifier G2 and the connection line L5.

The third comparator circuit 317 monitors the voltage of the capacitor unit 312. The third comparator circuit 317 comprises a third comparator CP3, resistors R31, R32, and R33, and a diode D31. The voltage of the capacitor unit 312 is input to a first terminal of the third comparator CP3 via a connection line L7. The connection line L7 is connected to an input side (connection line L3) of the capacitor unit 312. A second terminal of the third comparator CP3 is a reference terminal and voltage of the first predetermined value is input thereto. In the present embodiment, the first predetermined value is 60 V. The comparison result output from the third comparator circuit 317 is output to the switch 318 via a NOT gate G3 and the connection line L5. In FIG. 3, the connection line L7 is connected to a position different from that of the input end of the capacitor unit 312, but is actually connected to the input end of the capacitor unit 312.

The switch 318 switches on and off the supply of power from the power receiving unit 310 to the capacitor unit 312. The switch 318 is, for example, a field effect transistor (FET). The switch 318 turns on to allow the power receiving unit 310 to supply the power to the capacitor unit 312 when the predetermined condition is satisfied. The switch 318 turns off when the predetermined condition is not satisfied and stops the supply of power from the power receiving unit 310 to the capacitor unit 312. The switch 318 switches on and off based on the comparison results output from the first comparator circuit 315, the second comparator circuit 316, and the third comparator circuit 317. When the switch 318 is on, power is supplied from the power receiving unit 310 to the capacitor unit 312. When the switch 318 is off, no power is supplied from the power receiving unit 310 to the capacitor unit 312.

The switch 318 turns on when the comparison result output from the first comparator circuit 315 is equal to or less than 60 V, the comparison result output from the second comparator circuit 316 is equal to or more than 320 V, and the comparison result output from the third comparator circuit 317 is equal to or less than 60 V. In other words, the switch 318 turns on when the following condition including: (1) the input voltage of the step-up/step-down chopper 311 is equal to or less than 60 V; (2) the output voltage of the step-up/step-down chopper 311 is equal to or more than 320 V; and (3) the voltage of capacitor unit 312 is equal to or less than 60 V is satisfied as the predetermined condition.

The switch 318 turns off when the comparison result output from the first comparator circuit 315 is more than 60 V, the comparison result output from the second comparator circuit 316 is less than 320 V, or the comparison result output from the third comparator circuit 317 is more than 60 V. In other words, the switch 318 turns off when the above-described items (1), (2) or (3) is not satisfied as the predetermined condition.

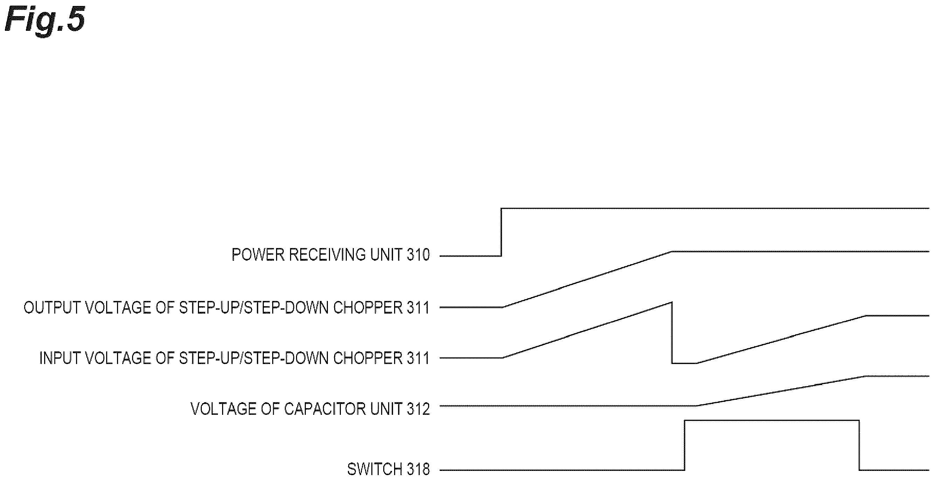

The operation of the power receiving device 31 during the initial charging of the capacitor unit 312 is described with reference to FIG. 5. At the time of the initial charging, the switch 318 is off. In other words, no power is supplied from the power receiving unit 310 to the capacitor unit 312. FIG. 5 illustrates the voltage of the power receiving unit 310, the output voltage of the step-up/step-down chopper 311, the input voltage of the step-up/step-down chopper 311, the voltage of the capacitor unit 312, and the on/off of the switch 318.

As illustrated in FIG. 5, in the power receiving device 31, when the power receiving unit 310 starts receiving power from feeders 21A and 21B, the input voltage and the output voltage of the step-up/step-down chopper 311 increase. After the input voltage and the output voltage of the step-up/step-down chopper 311 reach 320 V, and a light load is applied to the step-up/step-down chopper 31, the input voltage of the step-up/step-down chopper 311 decreases. When the input voltage of the step-up/step-down chopper 311 decreases to 60 V or lower, and the voltage of the capacitor unit 312 is equal to or less than 60 V, the switch 318 turns on. In other words, the switch 318 turns on when the input voltage of the step-up/step-down chopper 311 is equal to or less than 60 V, the output voltage of the step-up/step-down chopper 311 is equal to or more than 320 V, and the voltage of the capacitor unit 312 is equal to or less than 60 V. As a result, the power is supplied from the power receiving unit 310 to the capacitor unit 312 via the switch 318 (bypass circuit 314), and charging of the capacitor unit 312 is started.

When the capacitor unit 312 is fully charged and the voltage of the capacitor unit 312 is more than 60 V, the switch 318 turns off.

As illustrated in FIG. 3, the driving device 32 rotates and drives a plurality of wheels (not illustrated). The driving device 32 uses, for example, an electric motor or a linear motor, or the like, and uses power supplied from the power receiving device 31 as power for driving.

The transfer device 33 is capable of holding and accommodating articles to be transferred, and transfers the articles. The transfer device 33 includes, for example, a side-unloading mechanism that holds and protrudes articles, an elevating mechanism that moves the articles downward, and the like, and by driving the side-unloading mechanism and the elevating mechanism, delivers and receives the articles to and from a load port of a storage device such as a stocker or the like that is a transfer destination or a load port of a processing device. The transfer device 33 uses power supplied from the power receiving device 31 as power for driving.

The control device 34 controls the driving device 32 and the transfer device 33. The control device 34 uses the power supplied from the power receiving device 31 as the power for driving.

As explained above, the ceiling conveyor 30 of the conveyor system 1 according to the present embodiment includes the power receiving device 31. In the power receiving device 31, the bypass circuit 314 allows the power receiving unit 310 to supply power to the capacitor unit 312 via the bypass circuit 314 when the voltage of the capacitor unit 312 is equal to or less than the first predetermined value. When the capacitor unit 312 is being initially charged, the voltage of the capacitor unit 312 is equal to or less than the first predetermined value. In the power receiving device 31, by supplying power from the power receiving unit 310 to the capacitor unit 312 via the bypass circuit 314 during the initial charging of the capacitor unit 312, it is possible to prevent inrush current from the power receiving unit 310 to the capacitor unit 312 exceeding a certain current value (steady-state current value) from occurring during the initial charging (when the power supply is turned on). In addition, unlike conventional devices, the power receiving device 31 does not need to adjust the current value of the incoming current, thereby suppressing heat generation during charging. Therefore, the power receiving device 31 can prevent the occurrence of inrush current over a long charging time.

In the power receiving device 31 according to the present embodiment, the bypass circuit 314 includes the switch 318 configured to switch on and off of the supply of power from the power receiving unit 310 to the capacitor unit 312 via the bypass circuit 314. The switch 318 turns on to allow the power receiving unit 310 to supply power to the capacitor unit 312 via the bypass circuit 314 when the predetermined condition is satisfied, and turns off to allow the power receiving unit 310 to stop the supply of the power to the capacitor unit 312 via the bypass circuit 314 when the predetermined condition is not satisfied. The switch 318 turns on when the input voltage of the step-up/step-down chopper 311 is equal to or less than the second predetermined value and the output voltage of the step-up/step-down chopper 311 is equal to or more than the third predetermined value, and the voltage of the capacitor unit 312 is equal to or less than the first predetermined value. In this configuration, it is possible to avoid a large voltage being applied to the bypass circuit 314. Moreover, the capacitor unit 312 can be charged after the power is supplied to the step-up/step-down chopper 311. Furthermore, when the voltage of the capacitor unit 312 is equal to or less than the first predetermined value, the supply of power from the power receiving unit 310 to the capacitor unit 312 can be ensured.

In the power receiving device 31 according to the present embodiment, the bypass circuit 314 includes a first comparator CP1, a second comparator CP2, and a third comparator CP3. In this configuration, an operating voltage can be raised higher and influence of noise can be hardly exerted.

Although one embodiment according to the present invention has been described above, the present invention is not limited to the above-described embodiment, and various modifications can be made within the scope not departing from the gist of the present invention.

In the above-described embodiment, a form in which the track rail T is an orbital track is described as an example. However, the form of the track rail T is not limited to this.

In the above-described embodiment, a form in which the bypass section is the bypass circuit 314 is described as an example. However, the bypass section may be a computer system or a processor implemented in an integrated circuit. This configuration allows for downsizing of the devices.

In the above-described embodiment, a form in which the auxiliary power supply is the capacitor unit 312 is described as an example. However, the auxiliary power supply may be a secondary battery, such as a lithium-ion battery or the like, for example.

In the above embodiment, a form in which the switch 318 turns on when the following condition including: (1) the input voltage of the step-up/step-down chopper 311 is equal to or less than 60 V; (2) the output voltage of the step-up/step-down chopper 311 is equal to or more than 320 V; and (3) the voltage of the capacitor unit 312 is equal to or less than 60 V or less is satisfied as the predetermined condition. However, the switch 318 may turn on when at least the condition of (1) is satisfied.

In the above embodiment, a form in which the contactless power feeding system is applied to the conveyor system 1 is described as an example. However, the contactless power feeding system may be applied to other systems.

### Reference Signs List

1 ... Conveyor system (contactless power feeding system)
10 ... Contactless power feeding device (power transmission device)
21A and 21B ... Feeder
30 ... Ceiling conveyor (traveling vehicle)
31 ... Power receiving device
310 ... Power receiving unit (power receiving section)
311 ... Step-up/Step-down chopper
312 ... Capacitor unit (auxiliary power supply)
314 ... Bypass circuit (bypass section)
318 ... Switch (switching section)
T ... Track rail

## Claims

1. A power receiving device comprising:
a power receiving unit configured to receive power in a contactless manner from a power supply configured to supply power at a constant current value;
a step-up/step-down chopper connected to the power receiving unit and configured to control and supply power supplied from the power receiving unit to a load;
an auxiliary power supply connected to the step-up/step-down chopper and configured to supply power to the load via the step-up/step-down chopper; and
a bypass section configured to allow the power receiving section to bypass the step-up/step-down chopper to supply power to the auxiliary power supply, wherein
the bypass section allows the power receiving section to supply power to the auxiliary power supply via the bypass section when a voltage of the auxiliary power supply is equal to or less than a first predetermined value.

2. The power receiving device according to claim 1, wherein
the bypass section includes a switching section configured to switch on and off of supply of power from the power receiving section to the auxiliary power supply via the bypass section,
the switching section turns on to allow the power receiving section to supply power from the power receiving section to the auxiliary power supply via the bypass section when a predetermined condition is satisfied, and turns off to allow the power receiving section to stop the supply of the power to the auxiliary power supply via the bypass section when the predetermined condition is not satisfied, and
the predetermined condition includes a case where the voltage of the auxiliary power supply is equal to or less than the first predetermined value.

3. The power receiving device according to claim 2, wherein
the predetermined condition includes a case in which the input voltage of the step-up/step-down chopper is equal to or less than the second predetermined value, and
the switching section turns on when the voltage of the auxiliary power supply is equal to or less than the first predetermined value and the input voltage of the step-up/step-down chopper is equal to or less than the second predetermined value.

4. The power receiving device according to claim 3, wherein
the predetermined condition includes a case in which the output voltage of the step-up/step-down chopper is equal to or more than a third predetermined value, and
the switching section turns on when the voltage of the auxiliary power supply is equal to or less than the first predetermined value and the input voltage of the step-up/step-down chopper is equal to or less than the second predetermined value, and the output voltage of the step-up/step-down chopper is equal to or more than the third predetermined value.

5. The power receiving device according to any one of claims 1 to 4, wherein the bypass section is a circuit including a comparator.

6. A contactless power feeding system, comprising:
the power receiving device according to any one of claims 1 to 5; and
a power transmission device configured to transmit power at a constant current value to the power receiving device.

7. The contactless power feeding system according to claim 6, wherein
the power transmission device has a feeder provided along the track rail and
the power receiving device is provided to a traveling vehicle traveling on the track rail.
